# EUROPÄISCHE PATENTSCHRIFT

(11) **EP 0 733 450 B1**
(45) Veröffentlichungstag und Bekanntmachung des Hinweises auf die Patenterteilung: **09.06.1999**
(21) Anmeldenummer: 95104145.8
(22) Anmeldetag: 21.03.1995
(51) Int. Cl.: B27D 5/00, B29C 63/04

(54) **Verfahren und Vorrichtung zur Beschichtung einer Schmalseite eines Werkstückes mit Holz oder Holzwerkstoff aus dessen an die Schmalseite angrenzender Oberflächenschicht**
Method and device for coating the narrow side of a workpiece with wooden materials
Procédé et dispositif pour revêtir le côté étroit d'une pièce avec des matériaux en bois

(43) Veröffentlichungstag der Anmeldung: 25.09.1996
(73) Patentinhaber: HOMAG MASCHINENBAU AG, D-72296 Schopfloch (DE)
(72) Erfinder: Eisele, Klaus, D-72160 Horb Ihlingen (DE); Kalmbach, Kurt, D-72293 Glatten (DE); Schmid, Johannes, D-72181 Starzach-Wachendorf (DE)
(74) Vertreter: Kohlmann, Karl Friedrich, Dipl.-Ing.

(56) Entgegenhaltungen:
- EP-A- 0 545 390
- DE-A- 1 403 713
- DE-A- 2 357 051
- DE-A- 3 140 770
- DE-A- 3 429 388
- US-A- 2 751 879
- US-A- 3 661 688

## Beschreibung

Die Erfindung betrifft ein Verfahren und eine Vorrichtung zur Beschichtung einer Schmalseite eines Werkstückes mit Holz oder Holzwerkstoff aus dessen an die Schmalseite angrenzender Oberflächenschicht, bei dem im Durchlaufverfahren an einer Plattenkante eine gewünschte Profilform erzeugt und bei der die aus Holz oder Holzwerkstoff bestehende Oberflächenschicht, wie beispielsweise ein Echtholzfurnier, um die Schmalseite herumgebogen und angedrückt wird.

In der DE-OS 23 57 051 ist ein Verfahren sowie eine Vorrichtung zum Beschichten von Holz- oder Holzwerkstoffplatten mit Schichtstoffplatten, Kunststoffolien oder Furnieren offenbart, bei dem die Beschichtung um auf einer Seite der Holz- oder Holzwerkstoffplatte abgerundeten Kanten herumgezogen bzw. -gebogen werden. Bei dem bekannten Verfahren wird eine Platte aus Holz oder Holzwerkstoff in einem Preßgang gleichzeitig beidseitig mit der Beschichtung versehen und anschließend die Kanten mit spanenden Werkzeugen abgerundet, wobei der Überstand der Beschichtung auf einer Seite ebenfalls entfernt wird, während auf der anderen Seite der Überstand der Beschichtung stehen bleibt und anschließend mit Formwerkzeugen um die gerundeten Kanten nach der Beleimung herumgebogen wird.

Eine hieraus bekannte Vorrichtung weist entlang des Förderweges der Platten im Bereich der Plattenkanten angeordnete Fräswerkzeuge zum Besäumen der Beschichtung und Abrunden der Plattenkante unter Schonung der überstehenden Beschichtung. Des weiteren sind eine Leimabgabestation zum Beileimen der besäumten bzw. profilierten Plattenkante und nachgeschaltete Biegevorrichtungen zum Anbiegen und Anpressen der überstehenden Beschichtung an die abgerundete Plattenkante vorgesehen. Als Weiterbildung können Heizvorrichtungen zum Erwärmen der überstehenden Beschichtung vorgesehen sein, die vor, während und nach dem Anbiegen und Anpressen zur Erleichterung des Biegevorgangs und Beschleunigung des Anleimvorgangs dienen. Die Biegevorrichtung kann aus einer kufenförmigen Schiene oder einem Biegeschuh bestehen, deren Einlauf den Beschichtungsüberstand untergreift und deren Auslauf der Rundung der Plattenkante angepaßt ist. Die Biegevorrichtung kann ebenso eine Anzahl von Rollen oder Schuhe umfassen, die den Beschichtungsüberstand am Einlauf untergreifen und deren Mantelflächen bei aufeinanderfolgenden Rollen ein zunehmend der Rundung der Platten angepaßtes Profil aufweisen. Mit einer derartigen Vorrichtung ist es möglich, im kontinuierlichen Durchlaufverfahren abgerundete Kanten mit herumgeführter Beschichtung herzustellen.

In der Praxis hat sich nun gezeigt, daß Verfahrensweisen dieser bekannten Art für eine Beschichtung mit Echtholzfurnier allenfalls bedingt geeignet sind. So kommt es insbesondere bei kleinen Radien und komplizierten Kantenformen im Echtholzfurnier sehr schnell zu Einreißerscheinungen und Brecheffekten. Verfahrensweisen der bekannten Art eignen sich daher lediglich zur Herstellung von Abrundungen mit relativ großen Radien und dies auch nur bei manchen Holzarten.

Aus der DE 43 16 368 A1 ist ein Verfahren zur Herstellung von beschichteten, insbesondere furnierten Tafelelementen mit wenigstens einer profilierten, vorzugsweise eine abgerundete Längskante aufweisenden Längsseite bekannt, bei dem die Beschichtung mit einem Überstand auf einem Randsteg aufgeleimt und aufgepreßt wird. Der Randsteg wird dann durchtrennt, wonach der Überstand an die profilierte Kante angedrückt und angeleimt wird. Durch die Ausbildung des Randstegs soll während den einzelnen Arbeitsschritten eine zuverlässige Stabilisierung des Furnierblatts gewährleistet werden. Auch bei diesem bekannten Verfahren sind die vorgenannten Probleme bezüglich Einreißerscheinungen und Brecheffekten beim Andrücken und Herumziehen um die profilierte Kante bei Echtholzfurnieren nur bedingt verbessert.

In der DE 42 39 336 A1 ist schließlich ein Durchlaufverfahren zum Beschichten von Trägermaterial im abgerundeten oder profilierten Übergangsbereich des Trägermaterials bekannt. Bei diesem Verfahren ist ein Überstand des Beschichtungsmaterials in den zu beschichtenden Übergangsbereich herausgeführt. Als Klebstoff für das Ankleben des Beschichtungsmaterials an das Trägermaterial wird Schmelzkleber eingesetzt, der bei dem sogenannten Postforming-Verfahren eine wesentliche Reduzierung des Energieeinsatzes sowie eine Verringerung der Investitionskosten ermöglicht. Wiederum sind jedoch bei der Beschichtung von Echtholzfurnieren erscheinende Einreißerscheinungen und Brecheffekte bei diesem Verfahren nur bedingt reduziert.

Der Erfindung liegt das technische Problem zugrunde, eine für die Arbeitsweise im Durchlauf ohne Vorarbeiten geeignete Verfahrensweise und Vorrichtung der eingangs genannten Gattung zu schaffen, mit der ein aus Holz oder Holzwerkstoffen bestehender Überstand, insbesondere ein solcher aus Echtholzfurnier auch zu etwas komplizierteren Kantenprofilen und kleineren Radien geformt werden kann, ohne daß dabei Riß- und Brecherscheinungen auftreten, die die Qualität derartiger Werkstücke beeinträchtigen.

Dieses technische Problem wird durch ein Verfahren mit den Merkmalen nach dem Anspruch 1 sowie durch eine Vorrichtung mit den Merkmalen des Anspruchs 12 gelöst.

Der Erfindung liegt der Gedanke zugrunde, einen zum Herumziehen bzw. Herumbiegen und Andrücken an die profilierte Schmalseite vorgesehenen Überstand auf einer Seite mit einer Stabilisierungsschicht zu versehen, dann die der Stabilisierungsschicht gegenüberliegende Seite des Überstands mit einer Flüssigkeit zu tränken und schließlich den in dieser Weise vorbereiteten Überstand zu erwärmen. Mit anderen Worten: In einem ersten Schritt wird auf den später zu biegenden Überstand eine Stabilisierungsschicht aufgetragen, die dem Überstand die für die anschließende Behandlung erforderliche Stabilität und Festigkeit verleiht. Der in dieser Weise verfestigte Überstand wird dann auf der der Stabilisierungsschicht gegenüberliegenden Seite mit einer Flüssigkeit getränkt und erhitzt. Durch die Kombinationswirkung von peripherer Verfestigung einerseits und Tränken mit Flüssigkeit unter Wärmeeinfluß andererseits erlangt der Überstand eine Weichheit und Elastizität, mit der auch kleinere Radien und kompliziertere Profilformen im anschließenden Biege- und Formvorgang ohne Qualitätseinbuße realisiert werden können. Die Stabilisierungsschicht kann dabei entweder durch eine Schmelzkleberschicht gebildet sein, mit der gleichzeitig die Verklebung des Überstandes an der profilierten Kante erzielt wird, oder eine separate Schicht aus einem anderen, der Verfestigung dienenden Material, auf die dann eine Leimschicht für die Verklebung des Überstandes aufgetragen wird.

Mit dem erfindungsgemäßen Verfahren können in optimaler Weise nicht nur Echtholzfurniere, sondern sogar dünne Schichten von hochverdichteten Außenseiten von Holzwerkstoffplatten oder auch Holzbeschichtungen von Tischlerplatten ohne qualitätsmindernde Einreißerscheinungen oder Brecheffekte einstückig an profilierte Schmalseiten von Werkstücken im Durchlaufverfahren angeformt werden.

Wird eine weitere Leimschicht aufgetragen, so wird die Leimschicht durch die der Flüssigkeitsbehandlung nachgeordnete Wärmebehandlung in optimaler Weise auf die notwendige Temperatur unter gleichzeitiger Elastizitätsverbesserung des Echtholzes bzw. der Holzbeschichtung gebracht. Durch die Beschichtung des Überstandes wird zudem eine Sperrwirkung bezüglich der eingebrachten Flüssigkeit erzielt. Dies bedeutet, daß durch die sehr rasche Einbringung der Flüssigkeit durch die Wärmebehandlung in die Holzschicht diese nicht auf der gegenüberliegenden Seite herausdiffundieren kann und damit regelrecht in den Überstand "eingetrieben" wird. Grundsätzlich kann jede die Weichheit und Elastizität fördernde Flüssigkeit verwendet werden. Für die meisten Fälle eignet sich Wasser oder ein Wassergemisch.

Bei einer Holzwerkstoffplatte oder Tischlerplatte kann mit dem erfindungsgemäßen Verfahren erstmals die bereits vorhandene, gegenüber der Plattenfüllung bessere, mit einer geringeren Rauhigkeit versehene Oberfläche einer hochverdichteten Außenseite aus Holzmaterial einstückig um die profilierte Schmalseite herumgezogen werden. Dabei erübrigen sich die normalerweise notwendigen Glättungsmaßnahmen oder Beschichtungsvorgänge mit zusätzlichen Materialien an der profilierten Schmalseite.

Bei der Verarbeitung von Holzwerkstoffplatten ist es vorteilhaft, einen Überstand mit einer Dicke von ungefähr 0,3 mm stehen zu lassen, der dann in optimaler Weise mit dem erfindungsgemäßen Verfahren an die zuvor profilierte Schmalseite herumgezogen und angedrückt werden kann.

Vorteilhafterweise werden bei beidseitig mit einem Echtholzfurnier als Oberflächenschicht beschichtete plattenförmig Werkstücke derart bearbeitet, daß eine Oberflächenschicht vorgeritzt und dann die spanabhebende Bearbeitung auf die gewünschte Form von dieser Seite aus bis zur gegenüberliegenden Oberflächenschicht durchgeführt und diese als Überstand eingesetzt wird. Dadurch wird bei dem Ausspanen der Schmalseite in die gewünschte Profilform ein Ausbrechen an der Kante der einen Oberflächenschicht vermieden.

Die spanabhebende Bearbeitung der Schmalseite in die gewünschte Form kann entweder in einem Arbeitsschritt oder vorteilhafterweise auch in mehreren hintereinandergeschalteten Bearbeitungsschritten durch verschiedene spanabhebende Werkzeuge, wie beispielsweise Fräsen und/oder Sägen, erfolgen.

Dabei ist es besonders vorteilhaft, daß die gewünschte Form einen im Übergangsbereich von der angrenzenden Oberflächenschicht auf die zu beschichtende Schmalseite angeordneten Radius aufweist. Dadurch können beim Herumbiegen und Andrücken der Oberflächenschicht an die Schmalseite qualitätsmindernde Einreißerscheinungen oder Brecheffekte noch besser vermieden werden, als es bereits durch die erfindungsgemäßen Verfahrensschritte erreicht wird.

Es ist besonders vorteilhaft, wenn bei der spanabhebenden Bearbeitung eine Restschicht auf dem Überstand belassen und diese dann in einem letzten Bearbeitungsschritt abgetragen wird. Hierdurch wird bei der spanabhebenden Bearbeitung der Schmalseite in die gewünschte Form der später zu biegende Überstand solange wie möglich stabilisiert.

Wird durch die spanabhebende Bearbeitung im Auslaufbereich des Radius zum Überstand ein Spalt gebildet, so ist es vorteilhaft, diesen Spalt mit einem Leim oder Kleber auszufüllen. Dadurch wird eine bestmögliche Verleimung beim Andrücken des Überstands erreicht, ohne daß eine sichtbare Kante an der Außenseite am Radius zu sehen ist.

Damit eine Beschädigung des Überstands bei allen Arbeitsschritten vermieden wird, ist es vorteilhaft, den Überstand abzustützen.

Das Ausfüllen des durch die spanabhebende Bearbeitung im Auslaufbereich des Radius zum Überstand gebildeten Spaltes mit einem Leim oder Kleber erfolgt vorteilhafterweise durch eine Leim- oder Klebereinspritzdüse, die den Bearbeitungswerkzeugen nachgeordnet ist.

Insbesondere ist es vorteilhaft, die Lage der Abstützmittel für den Überstand über eine Abtasteinrichtung zu steuern, die sich an der angrenzenden Oberflächenschicht orientiert und auch die Leim- oder Klebereinspritzdüse derart fein positioniert, daß die Leim- oder Klebereinspritzdüse nicht in Kontakt mit dem Überstand kommen kann. Dadurch wird eine Beschädigung des Überstands vermieden. Vorteilhafterweise sind hierzu die Tasteinrichtungen in an sich bekannter Weise federnd gelagert und die Leim- oder Klebereinspritzdüse mit den Tasteinrichtungen zum Abstützen des Überstandes gekoppelt.

Vorteilhaft ist es ferner, auch die Bearbeitungswerkzeuge zur Herstellung der gewünschten Form der Schmalseite über eine Tasteinrichtung zu steuern. Mit dieser Tasteinrichtung wird zweckmäßigerweise der an den Überstand angrenzende Oberflächenbereich der angrenzenden Oberflächenschicht abgetastet.

In jedem Fall müssen die Bearbeitungswerkzeuge derart gesteuert werden, daß auf den sehr empfindlichen Überstand keine großen Kräfte einwirken. Die Anordnung muß in jedem Falle derart getroffen werden, daß lediglich ein minimaler Schnittdruck und minimale Querkräfte auf den Überstand einwirken. Dieser Forderung muß auch bei den nachgeschalteten Drückmitteln zum Umbiegen und Andrücken des Überstandes an die geformte Schmalseite Rechnung getragen werden.

Im folgenden sind zur weiteren Erläuterung und zum besseren Verständnis der Erfindung zwei Ausführungsbeispiele unter Bezugnahme auf die beigefügten Zeichnungen näher beschrieben und erläutert. Es zeigt:
- Fig. 1: eine schematische Seitenansicht einer beidseitig mit einem Echtholzfurnier beschichteten Platte;
- Fig. 2: bis 10 jeweils eine schematische Querschnittsansicht einer beschichteten Schmalseie der Platte nach Fig. 1 nach Ausführung der einzelnen Verfahrensschritte,
- Fig. 11: eine schematische Seitenansicht einer Spanplatte mit hochverdichteten Außenseiten bestehend aus einem Holzmaterialgemisch,
- Fig. 12: eine schematische Seitenansicht der Spanplatte nach Fig. 11, bei der ein Überstand aus Holzmaterial einer hochverdichteten Außenseite zum Herumbiegen der Spanplatte an eine profilierte Schmalseite stehengelassen ist, und
- Fig. 13: eine schematische Seitenansicht einer erfindungsgemäßen Vorrichtung.

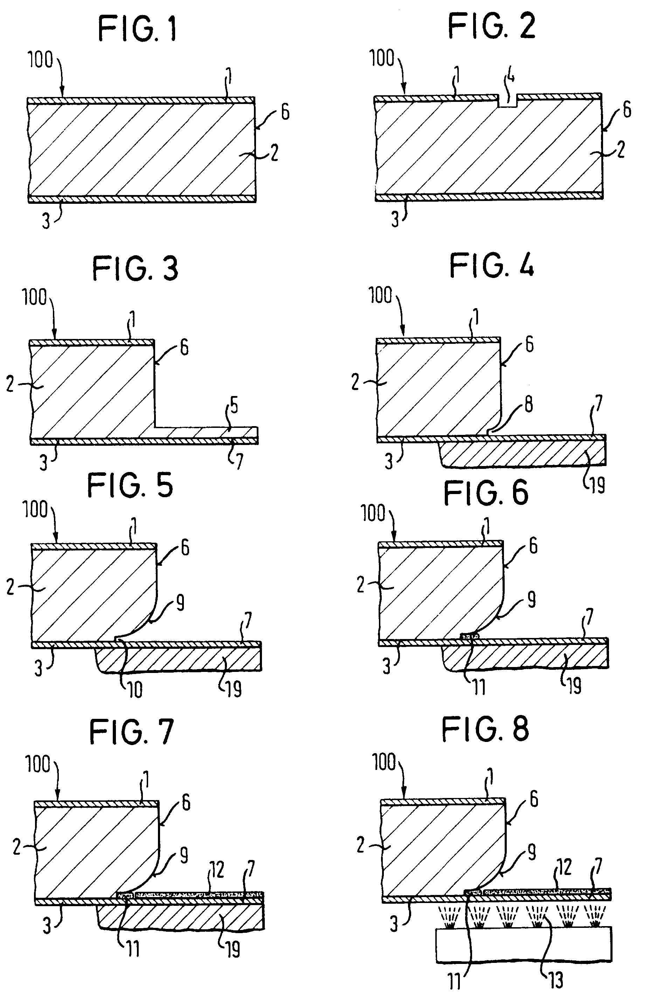

Aus den Fig. 1 bis 10 sind die einzelnen Verfahrensschritte, die an einer beidseitig beschichteten Platte auszuführen sind, sehr gut ersichtlich.

In der Fig. 1 ist eine bereits auf beiden Seiten mit einem Echtholzfurnier beschichtete Platte 100 gezeigt, die eine obere Furnierschicht 1 und eine untere Furnierschicht 3 sowie eine dazwischenliegende Plattenfüllung 2 aufweist. In einem fakultativen Verfahrensschritt wird zuerst die obere Furnierschicht 1 angeritzt, so daß diese Furnierschicht auf einer Linie parallel zu einer Schmalseite 6 feinbearbeitet wird. Dies erfolgt beispielsweise durch eine Ritzsäge, die eine Nut 4 in die obere Furnierschicht 1 und in einen kleinen Teilbereich der Plattenfüllung 2 einformt.

Gemäß der Fig. 3 wird dann mit einem geeigneten Fräswerkzeug der von der Nut 4 bis zu einer Schmalseite 6 verbleibende Rest der oberen Furnierschicht 1 sowie das darunterliegende Material der Plattenfüllung 2 weggespant, so daß ein Überstand 7 sowie ein darüberliegender Füllungsüberstand 5 stehen bleiben. Danach erfolgt, wie in der Fig. 4 gezeigt, mit einem weiteren Bearbeitungswerkzeug ein Wegnehmen des Füllungsüberstands 5. Dabei wird der FurnierÜberstand 7 nicht bearbeitet. Gleichzeitig mit diesem Arbeitsschritt gemäß Fig. 4 kann zusätzlich eine Grobbearbeitung des gewünschten Profils erfolgen. Wie in der Fig. 5 gezeigt, wird dann das gewünschte Profil mit einem Radisu 9 an der Schmalseite 6 mittels Fräsen erzeugt. Dabei verbleibt je nach gewähltem Profil und Werkzeug ein Spalt 10 zwischen der Plattenfüllung 2 und dem Überstand 7. Der Spalt 10 wird mit einer Raupe 11 aus Schmelzkleber oder einem anderen geeigneten Werkstoff, zum Beispiel einem EVA-Kleber, d.h. einem elastomeren Copolymer aus Ethylen und Vinylacetat, ausgefüllt, wie dies in Fig. 6 dargestellt ist. Es sind hierbei auch Schmelzkleber gemäß dem eingangs erläuterten Stand der Technik einsetzbar.

Nach diesen Bearbeitungsschritten erfolgt ein Auftrag einer Stabilisierungsschicht, hier eine Schmelzkleberschicht 12, auf der der profilierten Schmalseite 6 zugewandten Seite des Überstands 7. Dies ist in der Fig. 7 dargestellt.

Bis zu diesem Verfahrensschritt wird durch eine Einrichtung 19, hier eine Führungsplatte, der Überstand 7 an der Außenseite abgestützt.

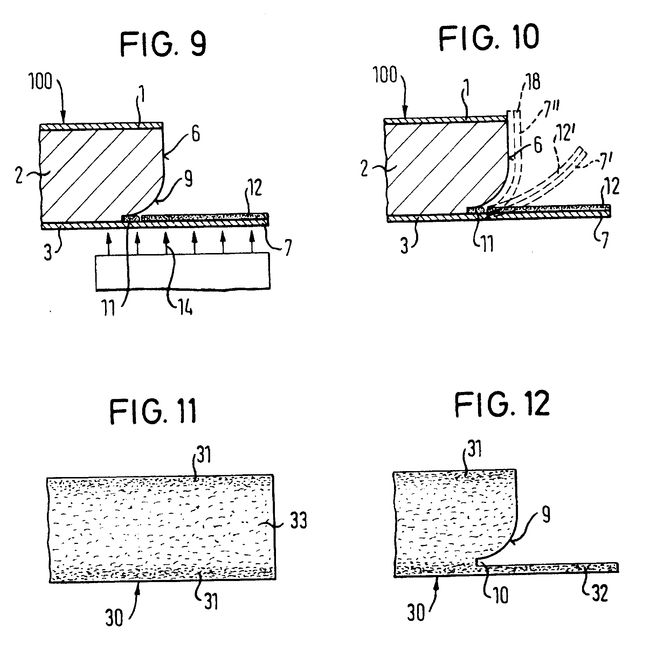

Gemäß der Fig. 8 wird dann auf die Außenseite des Überstands 7, d.h. die der Stabilisierungsschicht 12 gegenüberliegenden Seite des Überstands 7, eine Flüssigkeit 13, hier Wasser, aufgebracht. Sodann wird diese mit Flüssigkeit getränkte Seite des Überstands 7 einer Wärmestrahlung 14 ausgesetzt, wodurch die Feuchtigkeit in die Furnierschicht eingetrieben wird. Dies ist schematisch in der Fig. 9 dargestellt.

Schließlich erfolgt das Herumziehen bzw. -biegen und Andrücken des Überstands 7 an die profilierte Schmalseite 9, wobei in der Fig. 10 gestrichelt dargestellt die Zwischenstadien gezeigt sind. Bei einem ersten Zwischenstadium ist der Überstand 7' in Bereich der Schmelzkleberraupe 11 bereits angedrückt. Hierbei ist die Stabilisierungsschicht mit 12' bezeichnet. Das Endstadium des angedrückten Überstands ist mit 7'' bezeichnet.

Bei der in Fig. 10 gezeigten Darstellung ist der Überstand 7 so lang, daß: ein kleiner überstehender Furnierrand 18 verbleibt, der über die Furnierschicht 1 reicht. Dieser kann mit bekannten Mitteln abgefräst, abgesägt oder abgeschnitten werden. Es ist jedoch genauso möglich, die Länge des Überstands 7 so zu wählen, daß dessen obere Kante in angedrücktem Zustand an die Plattenkante genau mit der oberen Furnierschicht 1 abschließt, oder die oberer Furnierschicht 1 einen kleinen Überstand aufweist, dessen Länge der Furnierschichtdicke der unteren Furnierschicht 3 entspricht. Damit wird ein bündiger Abschluß der zwei aufeinandertreffenden Furnierschichten 1,3 ohne weiteren Bearbeitungsschritt erzielt.

Es ist auch möglich, die in den Figuren 2 bis 5 gezeigten Bearbeitungsschritte durch einen Bearbeitungsschritt zu ersetzen, indem ein Bearbeitungswerkzeug gleich die endgültige profilierte Schmalseite 6 erzeugt. Die Verwendung verschiedener Bearbeitungswerkzeuge, die nacheinander geschaltet die endgültige Profilierung der Schmalseite 6 ergeben, ermöglicht jedoch eine bessere Oberflächengüte der profilierten Schmalseite 6, so daß eine bessere Verklebung bzw. Verleimung des Überstands 7 möglich ist.

Gegenüber der in den Fig. 1 bis 10 dargestellten Verfahrensweise, bei der das Herumbiegen des Überstands 7 von unten nach oben gezeigt ist, ist es selbstverständlich auch möglich, den Überstand 7 aus der oberen Oberflächenschicht, hier die Furnierschicht 1, herauszuformen und dann das Herumbiegen des Überstands 7 von oben nach unen durchzuführen.

Ein zweites Ausführungsbeispiel einer bei dem erfindungsgemäßen Verfahren verwendbaren Platte ist in den Fig. 11 und 12 dargestellt. Die gezeigte Spanplatte 30 besitzt eine grob strukturierte Füllung 33, an die sich zwei hochverdichtete Außenseiten 31 anschließen. Die hochverdichteten Außenseiten 31 bestehen dabei in bekannter Weise aus feinen, mit Leim vermischten Holzteilchen. Dabei weist die Flächenseite eine bessere Oberflächengüte auf, als die Schmalseiten der Platte. Mit dem erfindungsgemäßen Verfahren ist es nun erstmals auch bei einer Spanplatte 30 möglich, einen aus einer der aus Holzmaterial besehenden Außenseite 31 gebildeten Überstand 32 stehen zu lassen, der dann an eine profilierte Seitenkante 9 herumgeführt und angedrückt wird. Hierzu werden die gleichen Verfahrensschritte wie bei der beidseitig mit Holzfurnier beschichteten Platte ausgeführt.

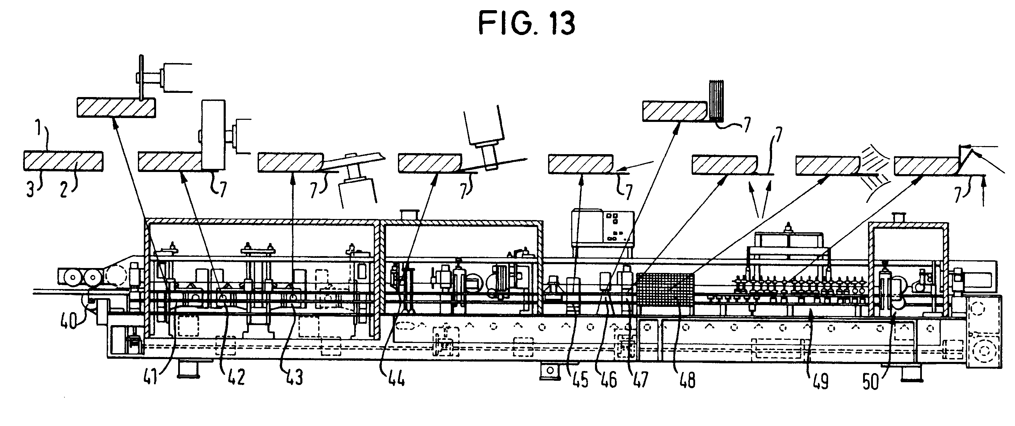

Eine schematische Seitenansicht einer erfindungsgemäßen Vorrichtung ist in der Fig. 13 gezeigt. Bei dieser Darstellung werden die Platten auf der linken Seite in die Durchlaufmaschine eingebracht. Dort werden sie mittels Transporteinrichtungen 40 aufgenommen durch die gesamte Maschine transportiert. An einer ersten Bearbeitungsstation wird die obere Furnierschicht mit einer Ritzsäge 41 angeritzt. An diese schließt sich ein Abblattfräser 42 an, der bis zur unteren Furnierschicht die Füllung wegfräst. Anschließend wird mit einem Profil- oder Abblattfräser 43 die gewünschte Profilform an der Längs- oder Seitenkante herausgespant. Anschließend wird zur weiteren Profilierung mit einer Ritzsäge 44 ein Spalt zwischen dem FurnierÜberstand und der Füllung herausgesägt.

Dieser Spalt wird in einer sich daran anschließenden Einspritzdüse mit einer Leimraupe oder einer Schmelzkleberraupe ausgefüllt. Darauf folgt das Aufbringen der Stabilisierungsschicht mit einer Walze 46. Bei diesem Ausführungsbeispiel wird durch die Walze 46 eine Schmelzkleberschicht aufgebracht. Direkt danach ist eine Auftragseinrichtung 47, mit der auf die der Stabilisierungsschicht gegenüberliegende Seite des Überstands eine Flüssigkeit aufgetragen wird, angeordnet. Diese besteht beispielsweise aus einem unterhalb der Plattenlaufrichtung angeordnetem Wasserbad, in dem zumindest eine Rolle oder Walze angeordnet ist. Deren Drehachse ist senkrecht zu der Transportrichtung der Platten angeordnet. Die Höhe der Walze ist dergestalt, daß diese zum einen zumindest teilweise im Wasserbad eintaucht und zum anderen die Unterseite des Überstandes an der Walze abrollt, wodurch der Auftrag mit Wasser erfolgt. Direkt danach sind Heizeinrichtungen 48 angeordnet, die bei Verwendung eines Schmelzklebers von oben wie auch von unten auf den Überstand gerichtet sind. Die untere Heizstrahlereinrichtung dient dabei zum Einbringen der zuvor aufgebrachten Flüssigkeit in den Überstand, hier das Furnier oder der Überstand einer Spanplatte oder einer Tischlerplatte. Die obere Heizeinrichtung bewirkt, daß der Schmelzkleber auf einer verarbeitbaren Temperatur bleibt. Schließlich wird durch nachgeordnete Rollen 49 der Überstand an die profilierte Seitenkante allmählich herangebogen und angedrückt. In einer Nachbearbeitungsstation 50 erfolgt dann das Abschneiden des Überstands über die Seite.

## Patentansprüche

1. Verfahren zur Beschichtung einer Schmalseite (6) eines Werkstückes (100) mit Holz oder Holzwerkstoff aus dessen an die Schmalseite (6) angrenzender Oberflächenschicht (3, 31), bei dem im Durchlaufverfahren
a) die zu beschichtende Schmalseite (6) durch spanabhebende Bearbeitung in eine gewünschte Form gebracht und dabei ein für die Beschichtung ausreichender Überstand (7, 32) aus der angrenzenden Oberflächenschicht (3, 31) erzeugt wird,
b) auf den Überstand (7, 32) auf der der zu beschichtenden Schmalseite zugewandten Seite eine Stabilisierungsschicht (12) aufgetragen wird,
c) auf die der Stabilisierungsschicht (12) gegenüberliegenden Seite des Überstandes (7, 32) eine Flüssigkeit (13) aufgebracht wird,
d) zumindest die mit der Flüssigkeit (13) versehene Seite des Überstandes einer Wärmebehandlung ausgesetzt, und
e) der Überstand (7, 32) an der zu beschichtenden Schmalseite (6) angelegt und an diese angepreßt wird.

2. Verfahren nach Anspruch 1, dadurch gekennzeichnet, daß als Stabilisierungsschicht (12) ein Schmelzkleber eingesetzt wird.

3. Verfahren nach Anspruch 1, dadurch gekennzeichnet, daß das Werkstück (2) eine einseitig mit einem Echtholzfurnier (3) als Oberflächenschicht (3) beschichtete Platte ist.

4. Verfahren nach Anspruch 1, dadurch gekennzeichnet, daß das Werkstück (2) eine Holzwerkstoffplatte (30) oder Tischlerplatte ist, die zumindest eine hochverdichtete, aus Holzmaterial bestehende Außenseite (31) aufweist.

5. Verfahren nach Anspruch 1, bei dem beidseitig mit einem Echtholzfurnier als Oberflächenschicht beschichtete plattenförmige Werkstücke (100) bearbeitet werden, dadurch gekennzeichnet, daß eine Oberflächenschicht (1) vorgeritzt und dann die spanabhebende Bearbeitung auf die gewünschte Form von dieser Seite aus bis zur gegenüberliegenden Oberflächenschicht (3) durchgeführt und diese als Überstand (7) eingesetzt wird.

6. Verfahren nach einem der vorhergehenden Ansprüche, dadurch gekennzeichnet, daß die spanabhebende Bearbeitung der Schmalseite (6) in die gewünschte Form in mehreren hintereinandergeschalteten Bearbeitungsschritten erfolgt.

7. Verfahren nach Anspruch 1, 5 oder 6, dadurch gekennzeichnet, daß die gewünschte Form einen im Übergangsbereich von der angrenzenden Oberflächenschicht (3, 31) auf die zu beschichtende Schmalseite (6) angeordneten Radius (9) aufweist.

8. Verfahren nach Anspruch 6, dadurch gekennzeichnet, daß bei der spanabhebenden Bearbeitung eine Restschicht (5) auf dem Überstand (7, 32) belassen und diese dann in einem letzten Bearbeitungsschritt abgetragen wird.

9. Verfahren nach Anspruch 7, dadurch gekennzeichnet, daß durch die spanabhebende Bearbeitung im Auslaufbereich des Radius (9) zum Überstand (7, 32) ein Spalt (10) gebildet wird, der mit einem Leim oder Kleber (11) ausgefüllt wird.

10. Verfahren nach Anspruch 1, dadurch gekennzeichnet, daß als Stabilisierungsschicht (11) eine Schmelzkleberschicht eingesetzt wird, auf die eine Leimschicht für die Verklebung des Überstandes (7, 32) aufgetragen wird.

11. Verfahren nach einem der Ansprüche 1 bis 10, dadurch gekennzeichnet, daß der Überstand (7, 32) abgestützt wird.

12. Vorrichtung zur Beschichtung einer Schmalseite (6) eines Werkstückes (100) mit Holz oder Holzwerkstoff aus dessen an die Schmalseite (6) angrenzender Oberflächenschicht (3, 31) im Durchlaufverfahren, mit
- einer Fördereinrichtung (40) für die Werkstücke (2);
- am Wege der Werkstücke (100) angeordneten Bearbeitungswerkzeugen (41 bis 44) zur mindestens einstufigen Herstellung der gewünschten Form an der Schmalseite (6) unter Bildung eines Überstandes (7, 32) aus der angrenzenden Oberflächenschicht (3, 34);
- Auftragsmitteln (46) zum Aufbringen einer Stabilisierungsschicht (12) auf die der zu beschichtenden Schmalseite (6) zugewandten Seite des Überstandes (7, 32);
- einer Auftragseinrichtung (47), mit der auf die der Stabilisierungsschicht (12) gegenüberliegenden Seite des Überstandes (7, 32) eine Flüssigkeit (13) aufgetragen wird;
- einer der Auftragseinrichtung (47) nachgeordnete Wärmevorrichtung (48), mit der die Flüssigkeit (13) in dem Überstand (7, 32) erhitzt wird, und
- nachgeschalteten Andrückmitteln (49) zum Umbiegen und Andrücken des Überstandes (7, 32) an die geformte Schmalseite (6).

13. Vorrichtung nach Anspruch 12, dadurch gekennzeichnet, daß die Bearbeitungswerkzeuge hintereinander angeordnete Fräser (42, 43) und/oder Sägen (41, 44) sind.

14. Vorrichtung nach Anspruch 12, dadurch gekennzeichnet, daß die Auftragmittel eine Auftragswalze (46) umfassen.

15. Vorrichtung nach Anspruch 12, dadurch gekennzeichnet, daß die Auftragseinrichtung umfaßt:
- ein Flüssigkeitsbad,
- eine zumindest teilweise in dem Flüssigkeitsbad laufende Walze, deren Drehachse senkrecht zur Transportrichtung der Werkstücke (100) verläuft und derart unterhalb der geförderten Werkstücke angeordnet ist, daß der Überstand in Kontakt mit der Walze kommt.

16. Vorrichtung nach einem der Ansprüche 12 bis 15, zur Durchführung des Verfahrens nach Anspruch 7 und 9, dadurch gekennzeichnet, daß eine Leim- oder Klebereinspritzdüse (45) den Bearbeitungswerkzeugen (42 bis 44) nachgeordnet ist, mit der der im Auslaufbereich des Radius (9) zum Überstand (7, 32) angeordnete Spalt (10) mit Leim- oder Kleber (11) ausgefüllt wird.

17. Vorrichtung nach einem der Ansprüche 12 bis 16, dadurch gekennzeichnet, daß Einrichtungen (19) zum Abstützen des Überstandes (7, 32) vorgesehen sind.

18. Vorrichtung nach Anspruch 12, dadurch gekennzeichnet, daß die Bearbeitungswerkzeuge (41 bis 44) mit einer Tasteinrichtung gekoppelt sind, die den an den Überstand (7, 32) angrenzenden Oberflächenbereich der angrenzenden Oberflächenschicht (3, 34) abgreift.

## Claims

1. Method for coating a narrow side (6) of a workpiece (100) with timber or timber material from its surface layer (3, 31) adjoining the narrow side (6), in which in a continuous process
a) the narrow side (6) to be coated is brought to a desired shape by machining and in the process a projecting portion (7, 32) sufficient for the coating is produced from the adjoining surface layer (3, 31),
b) a stabilising layer (12) is applied to the projecting portion (7, 32) on the side facing towards the narrow side (6) to be coated,
c) a liquid (13) is applied to the side of the projecting portion (7, 32) opposite the stabilising layer (12),
d) at least the side of the projecting portion provided with the liquid (13) is subjected to heat treatment, and
e) the projecting portion (7, 32) is laid against the narrow side (6) to be coated and pressed against it.

2. Method according to claim 1, characterised in that a hot melt-type adhesive is used as the stabilising layer (12).

3. Method according to claim 1, characterised in that the workpiece (2) is a board coated on one side with a real wood veneer (3) as the surface layer (3).

4. Method according to claim 1, characterised in that the workpiece (2) is a timber material board (30) or wood core plywood which comprises at least one highly compressed outer side (31) consisting of timber material.

5. Method according to claim 1, in which board-like workpieces (100) coated on both sides with a real wood veneer as the surface layer are machined, characterised in that one surface layer (1) is prescratched and then machining to the desired shape is carried out from this side as far as the opposite surface layer (3) and the latter is used as the projecting portion (7).

6. Method according to any of the preceding claims, characterised in that machining of the narrow side (6) to the desired shape takes place in several successive machining steps.

7. Method according to claim 1, 5 or 6, characterised in that the desired shape has a radius (9) arranged in the transition region from the adjoining surface layer (3, 31) to the narrow side (6) to be coated.

8. Method according to claim 6, characterised in that during machining a residual layer (5) is left on the projecting portion (7, 32) and this is then removed in a final machining step.

9. Method according to claim 7, characterised in that by machining in the exit region of the radius (9) to the projecting portion (7, 32), a gap (10) is formed, which is filled with a glue or adhesive (11).

10. Method according to claim 1, characterised in that a hot melt-type adhesive layer is used as the stabilising layer (11), to which is applied a glue layer for adhesion of the projecting portion (7, 32).

11. Method according to any of claims 1 to 10, characterised in that the projecting portion (7, 32) is supported.

12. Apparatus for coating a narrow side (6) of a workpiece (100) with timber or timber material from its surface layer (3, 31) adjoining the narrow side (6) in a continuous process, with
- a conveying device (40) for the workpieces (2);
- machine tools (41 to 44) arranged on the path of the workpieces (100) for making the desired shape on the narrow side (6) in at least one stage, forming a projecting portion (7, 32) from the adjoining surface layer (3, 34);
- applicator means (46) for applying a stabilising layer (12) to the side of the projecting portion (7, 32) facing towards the narrow side (6) to be coated;
- an applicator device (47) with which a liquid (13) is applied to the side of the projecting portion (7, 32) opposite the stabilising layer (12),
- a heating device (48) which is mounted behind the applicator device (47) and with which the liquid (13) in the projecting portion (7, 32) is heated, and
- subsequent pressing means (49) for bending the projecting portion (7, 32) round and pressing it against the shaped narrow side (6).

13. Apparatus according to claim 12, characterised in that the machine tools are milling tools (42, 43) and/or saws (41, 44) arranged one behind the other.

14. Apparatus according to claim 12, characterised in that the applicator means include an applicator roller (46).

15. Apparatus according to claim 12, characterised in that the applicator device includes:
- a liquid bath,
- a roller which rotates at least partially in the liquid bath and whose turning shaft runs perpendicularly to the direction of transport of the workpieces (100) and is arranged in such a way below the workpieces conveyed that the projecting portion comes in contact with the roller.

16. Apparatus according to any of claims 12 to 15, for carrying out the method according to claims 7 and 9, characterised in that a glue or adhesive injection nozzle (45) is mounted behind the machine tools (42 to 44), with which the gap (10) arranged in the exit region of the radius (9) to the projecting portion (7, 32) is filled with glue or adhesive (11).

17. Apparatus according to any of claims 12 to 16, characterised in that means (19) are provided for supporting the projecting portion (7, 32).

18. Apparatus according to claim 12, characterised in that the machine tools (41 to 44) are coupled to a sensing device which senses the surface region of the adjoining surface layer (3, 34) which adjoins the projecting portion (7, 32).

## Revendications

1. Procédé pour revêtir le côté étroit (6) d'une pièce façonnée (10) avec du bois ou du matériau en bois, depuis sa couche de surface (3, 31) limitrophe au côté étroit (6), dans lequel, a l'occasion d'un processus à passes opératoires :
a) le côté étroit (6) à revêtir est mis à la forme souhaitée, par usinage à enlèvement de copeaux, et un élément saillant (7, 32), suffisant pour le revêtement, est généré à partir de la couche de surface (3, 31) limitrophe,
b) une couche de stabilisation (32) est appliquée sur l'élément saillant (7, 32) sur la face tournée vers le côté étroit à revêtir,
c) un liquide (13) est appliqué sur la face, opposée à la couche de stabilisation (12), de l'élément saillant (7, 32),
d) au moins la face, pourvue du liquide (13), de l'élément saillant est exposée à un traitement thermique, et
e) l'élément saillant (7, 32) est plaqué sur le côté étroit (6) à revêtir et est pressé sur celui-ci.

2. Procédé selon la revendication 1, caractérisé en ce qu'on utilise comme couche de stabilisation (12) un adhésif à fusion.

3. Procédé selon la revendication 1, caractérisé en ce que la pièce façonnée (2) est une plaque revêtue sur une face d'un plaquage en bois naturel (3) faisant office de couche de surface (3).

4. Procédé selon la revendication 1, caractérisé en ce que la pièce façonnée (2) est un panneau de pièce façonnée en bois (3) ou une plaque de menuiserie, présentant au moins une face extérieure (31) fortement comprimée, réalisée en un matériau à base de bois.

5. Procédé selon la revendication 1, dans lequel des pièces façonnées (100) en forme de plaques sont revêtues sur les deux faces d'un plaquage en bois naturel réalisé sous la forme d'une couche de surface, caractérisé en ce qu'une couche de surface (1) est soumise à un préentaillage et ensuite est effectué l'usinage à enlèvement de copeaux, à la formée souhaitée, depuis cette face, jusqu'à la couche de surface (3) opposée, celle-ci étant utilisée à titre d'élément saillant (7).

6. Procédé selon l'une des revendications précédentes, caractérisé en ce que l'usinage à enlèvement de copeaux du côté étroit (6) s'effectue à la forme souhaitée en plusieurs étapes d'usinage se succédant.

7. Procédé selon la revendication 1, 5 ou 6, caractérisé en ce que la forme souhaitée présente un rayon (9) disposé dans la zone de transition entre la couche de surface (3, 31) limitrophe et le côté étroit (6) à revêtir.

8. Procédé selon la revendication 6, caractérisé en ce que, lors de l'usinage à enlèvement de copeaux, une couche résiduelle (5) est laissée subsister sur l'élément saillant (7, 32) et cette couche étant ensuite enlevée lors d'une dernière étape d'usinage.

9. Procédé selon la revendication 7, caractérisé en ce que, au moyen de l'usinage à enlèvement de copeaux dans la zone de sortie du rayon (9) vers l'élément saillant (7, 32) est constitué un intervalle (10) qui est comblé avec de la colle ou un adhésif (11).

10. Procédé selon la revendication 1, caractérisé en ce qu'on utilise comme couche de stabilisation (11) une couche d'adhésif à fusion sur laquelle est appliquée une couche de colle destinée au collage de l'élément saillant (7, 32).

11. Procédé selon l'une des revendications 1 à 10, caractérisé en ce que l'élément saillant (7, 32) est soutenu.

12. Dispositif de revêtement d'un côté étroit (6) d'une pièce façonnée (100) avec du bois ou un matériau à base de bois à partir de sa couche de surface (3, 31) limitrophe au côté étroit (6), dans un processus à passes opératoires, comportant :
- un dispositif de transport (40) destiné aux pièces façonnées (2);
- des outils d'usinage (41 à 44) disposés sur le chemin suivi par les pièces façonnées (100) afin de réaliser une fabrication en au moins une étape de la forme souhaitée sur le côté étroit (6), en créant un élément saillant (7, 32) à partir de la couche de surface (3, 34) limitrophe;
- des moyens d'application (46) destinés à appliquer une couche de stabilisation (12) sur la face, tournée vers le côté étroit (6) à revêtir, de l'élément saillant (7, 32);
- un dispositif d'application (47) à l'aide duquel un liquide (13) est appliqué sur la face, opposée à la couche de stabilisation (12), de l'élément saillant (7, 32);
- un dispositif thermique (48) disposé en aval du dispositif d'application (47), à l'aide duquel le liquide (13) se trouvant dans l'élément saillant (7, 32) est chauffé, et
- des moyens de pressage (49) montés en aval, afin de replier et de presser l'élément saillant (7, 32) sur le côté étroit (6) formé.

13. Dispositif selon la revendication 12, caractérisé en ce que les outils d'usinage sont des fraises (42, 43) et/ou des scies (41, 44), montées les unes derrière les autres.

14. Dispositif selon la revendication 12, caractérisé en ce que des moyens d'application comprennent un rouleau applicateur (46).

15. Dispositif selon la revendication 12, caractérisé en ce que le dispositif d'application comprend :
- un bain de liquide,
- un rouleau tournant au moins partiellement dans le bain de liquide, rouleau dont l'axe de rotation s'étend perpendiculairement par rapport à la direction de transport des pièces façonnées (100) et est disposé au-dessous des pièces façonnées transportées, de manière que l'élément saillant vienne en contact avec le rouleau.

16. Dispositif selon l'une des revendications 12 à 15, pour la mise en oeuvre du procédé selon les revendications 7 et 9, caractérisé en ce qu'une buse d'injection de colle ou d'adhésif (45) est montée en aval des outils d'usinage (42 à 44), buse à l'aide de laquelle l'interstice (10), ménagé dans la zone de sortie du rayon (9) vers l'élément saillant (7, 32), est rempli par de la colle ou un adhésif (11).

17. Dispositif selon l'une des revendications 12 à 16, caractérisé en ce que des dispositifs (19) sont prévus pour soutenir l'élément saillant (7, 32).

18. Dispositif selon la revendication 12, caractérisé en ce que les outils d'usinage (41 à 44) sont couplés à un dispositif de palpage qui mesure la zone de surface, limitrophe à l'élément saillant (7, 32), de la couche de surface (3, 34) limitrophe.
